## Europäisches Patentamt

## European Patent Office

## Office européen des brevets

(11) Veröffentlichungsnummer: **0 452 798 A2**

# EUROPÄISCHE PATENTANMELDUNG

(21) Anmeldenummer: **91105721.4**

(22) Anmeldetag: **11.04.91**

(51) Int. Cl.⁵: **B23H 9/14**

(30) Priorität: **14.04.90 DE 4012233**

(43) Veröffentlichungstag der Anmeldung:
**23.10.91 Patentblatt 91/43**

(84) Benannte Vertragsstaaten:
**AT BE CH DE DK ES FR GB GR IT LI NL SE**

(71) Anmelder: **GEZE GmbH & Co.**
**Siemensstrasse 21-29 Postfach 13 63**
**W-7250 Leonberg(DE)**

(72) Erfinder: **Kullen, Johannes**
**Forststrasse 22**
**W-7300 Esslingen(DE)**
Erfinder: **Furch, Gerhard**
**Fohrenbühlstrasse 10**
**W-7032 Sindelfingen(DE)**

(54) **Verfahren zum Fertigen einer Bohrung.**

(57) Beschrieben ist ein Verfahren zum Entgraten und Entspänen von Bohrungen. Das Verfahren kann insbesondere in der Serienfertigung eingesetzt werden, vorzugsweise wenn sich kreuzende oder ineinander mündende tiefe Bohrungen gefertigt werden müssen, z.B. bei Antriebsaggregaten und Türschließern mit hydraulischem oder pneumatischem Kreislauf.

Die Erfindung besteht darin, daß die Bohrung zunächst spanend vorgebohrt wird und sodann durch Erodieren zwecks Entspänen und Entgraten nachbearbeitet wird.

Die erosive Nachbearbeitung der Bohrung (2) erfolgt mittels einer Erodierelektrode (10). Dabei werden die Grate (3 a) und die Späne (7) erosiv entfernt.

Fig. 2

Die Erfindung betrifft ein Verfahren zum Fertigen einer Bohrung sowie ein Erodierwerkzeug insbesondere zum Säubern einer Bohrung, z. B. zum Entgraten und/oder Entspänen.

In der Fertigungspraxis müssen Bohrungen in der Regel entgratet und gesäubert werden. Dies geschieht üblicherweise durch spanende Nachbearbeitung bzw. Ausspülen der Verunreinigungen wie Späne usw. Schwierig ist dies bei sacklochartigen Bohrungen, insbesondere Tieflochbohrungen. Ein hoher Aufwand ergibt sich ferner grundsätzlich dann, wenn die Grate schwer brechen, z. B. bei zähen (duktilen) und weichen Werkstoffen, wie Al-Strangpreßprofilen, Al-Legierungen mit geringem Si-Gehalt (kleiner als 1 %), Cr-Ni-Stählen, Cu und Cu-Legierungen (Cu Zn 37) und Nichtmetallen.

Besondere Probleme mit schwer brechenden Graten ergeben sich bei spanend hergestellten Bohrungen in Aluminium-Strangpreßprofil bzw. bei Al-Werkstoffen mit geringem Silicium-Gehalt.

Ein erhöhter Aufwand entsteht ferner immer dann, wenn verstärkte Gratbildung auftritt, z. B. beim spanenden Bohren miteinander verbundener Bohrungen, wo Grate insbesondere im Bereich der Einmündungen und Bohrungskreuzungen auftreten.

Der Aufwand zum Entgraten und Säubern von Bohrungen ist besonders in der Serienfertigung nachteilig und immer dann unerläßlich, wenn weitere Fertigungsschritte oder die Bauteilefunktion saubere Bohrungen verlangen.

Die genannten Probleme treten insbesondere bei der Fertigung von Antriebsaggregaten und Türschließern auf, die einen inneren Hydraulik- oder Pneumatikkreislauf haben, der meist aus einer Vielzahl von sich kreuzenden und ineinander mündenden Kanälen besteht.

Der Erfindung liegt die Aufgabe zugrunde, ein Verfahren zum Fertigen von sauberen Bohrungen zu schaffen, das einfach und schnell ist und auch in der Serienfertigung vorteilhaft eingesetzt werden kann.

Diese Aufgabe wird mit der Erfindung dadurch gelöst, daß nach dem Ausbilden der Bohrung diese durch Erodieren nachbearbeitet wird.

Durch die erosive Nachbearbeitung werden eventuelle Grate und andere Ungleichmäßigkeiten in der Bohrung sowie Verunreinigungen, gegebenenfalls Späne oder dergleichen entfernt. Mit besonderem Vorteil ist das Verfahren bei tiefen Bohrungen anwendbar.

Die erosive Nachbearbeitung kann z. B. durch funkenerosives Bearbeiten, lichtbogenerosives Bearbeiten, Laserbearbeiten, Elektronenstrahlbearbeiten, chemisches Bearbeiten und/oder elektrochemisches Bearbeiten erfolgen. Es kann hierbei jeweils erosives Bohren oder Senken angewandt werden.

Die Anwendung des Verfahrens ist an unterschiedlichen Werkstoffen möglich, soweit die Werkstoffe erodierbar sind. Das Verfahren kann insbesondere bei allen elektrisch leitenden Werkstoffen angewandt werden. Laserbearbeiten und chemisches Bearbeiten kann mit Vorteil auch bei Nichtleitern, wie Kunststoffen, angewandt werden.

Das der erosiven Nachbearbeitung vorangehende Ausbilden der Bohrung kann auf beliebige Weise erfolgen, das heißt durch spanendes Bohren und beliebig anders. So können auch Bohrungen oder Löcher, welche z. B. im Guß bereits vorgeformt sind, mit dem erfindungsgemäßen Verfahren nachbearbeitet werden.

Bei Tieflochbohrungen und miteinander verbundenen Bohrungen ist die Anwendung des Verfahrens besonders interessant.

Besonders vorteilhaft sind Ausführungen des Verfahrens, bei denen die Bohrung spanend gebohrt wird und sodann durch Erodieren nachbearbeitet wird.

Vorteilhaft ist das Verfahren zum Fertigen einer Bohrung und mindestens einer in die Bohrung mündenden oder die Bohrung durchkreuzenden anderen Bohrung. Die eine und die andere Bohrung können identisch mit gleichem Durchmesser und gleicher Länge aber auch unterschiedlich bemessen sein. Vorzugsweise kann vorgesehen sein, daß die eine Bohrung und die andere Bohrung spanend gebohrt werden und sodann die eine Bohrung und/oder die andere Bohrung durch Erodieren nachbearbeitet wird.

Ein besonders effektives Verfahren zur Gratentfernung für den Fall, daß zuerst die eine Bohrung und sodann die andere Bohrung spanend gebohrt wird, besteht darin, daß nach dem spanenden Bohren zumindest vorzugsweise ausschließlich die zuerst gebohrte Bohrung durch Erodieren nachbearbeitet wird.

Bei ineinander mündenden oder kreuzenden Bohrungen kann durch die erosive Bearbeitung eine Abrundung der Kanten im Mündungs- bzw. Durchdringungsbereich erhalten werden.

Das Entfernen der Späne und ähnlicher Verunreinigungen kann vorzugsweise dadurch erfolgen, daß nach dem spanenden Bohren zumindest ein Teil der Späne mittels eines in die Bohrung eingeführten Werkzeugs zusammengeschoben und erodiert wird, vorzugsweise durch funkenerosives oder lichtbogenerosives Bearbeiten, wobei das Werkzeug vorzugsweise von der Erodierelektrode oder einem mit der Erodierelektrode verbundenen Teil gebildet wird. Diese Arbeitsweise ist insbesondere bei Sacklöchern vorteilhaft. Die Erodierelektrode kann so geschaltet sein, daß der Erodiervorgang gleichzeitig mit dem Zusammenschieben der Späne erfolgt. Bei abgewandelten Ausführungen kann die Elektrode auch absatzweise arbeiten.

Für eine besonders maßgenaue Bearbeitung, insbesondere auch bei langen Bohrungen, kann vorgesehen sein, daß die erosive Nachbearbeitung mit einer in die zu bearbeitende Bohrung eintauchenden Erodierelektrode erfolgt, die an ihrem freien Ende einen aktiven Abschnitt aufweist, wobei der übrige eintauchende Teil der Elektrode nach außen inaktiv gehalten wird. Der aktive Abschnitt der Elektrode kann somit auf eine kleine definierte Erodierzone beschränkt werden, so daß unkontrolliertes Erodieren bei einem Kontakt anderer Elektrodenabschnitte an der Bohrungswand verhindert wird.

Das maßgenaue bzw. funktionsgerechte Arbeiten wird dadurch optimiert, daß zwischen der Innenwandung der Bohrung und der in die Bohrung eingeführten Erodierelektrode ein Erodierspalt gebildet wird, indem der Durchmesser des aktiven Abschnitts geringer ist als der Durchmesser des inaktiven Abschnitt und dieser geringer ist als der Durchmesser der Bohrung, wobei diese Durchmesser zur Ausbildung des Erodierspalts aufeinander abgestimmt sind.

Weitere Merkmale und Vorteile ergeben sich aus der nachfolgenden Beschreibung, mit der Ausführungsbeispiele in Verbindung mit den Figuren erläutert werden.

Dabei zeigen

Figur 1      einen Längsschnitt durch einen Abschnitt eines Türschließergehäuses mit miteinander verbundenen Bohrungen, während des erosiven Nachbearbeitens mit im Gehäuse eingeführter Erodierelektrode;

Figur 2      einen vergrößerten Ausschnitt im Bereich der Erodierelektrode in Figur 1;

Figur 3      einen vergrößerten Ausschnitt im Bereich des Bohrungsgrunds in Figur 1 nach der erosiven Bearbeitung bei einer besonderen Ausführung des Verfahrens.

Das erfindungsgemäße Verfahren kann - wie in den Figuren dargestellt - zur Fertigung von Bohrungen im Gehäuse hydraulischer Türschließer angewandt werden. Der Aufbau solcher Türschließer ist z. B. aus der DE-GM 72 39 340 oder EP 0 215 264 bekannt. Sie haben Gehäuse mit Hydraulikkanälen, die zu einem Hydraulikkreislauf miteinander verbunden sind, indem als Bohrungen ausgebildete Kanäle eineinander münden und sich kreuzen.

Die Figuren zeigen das mit 1 bezeichnete Gehäuse während der Fertigung noch vor dem Einbau der Schließermechanik. In dem dargestellten Fall erfolgt gerade die erosive Nachbehandlung von zuvor spanend gebohrten Gehäusebohrungen 2 - 5. Bei dem erfindungsgemäßen Verfahren wird in dem Ausführungsbeispiel eine spezielle Erodierelektrode 10 verwendet.

Das Gehäuse 1 ist aus Metall, vorzugsweise ein abgelängtes Al-Strangpreßprofil oder Al-Druckguß. Das nur abschnittsweise dargestellte Gehäuse 1 ist vorzugsweise quaderförmig mit quadratischem Querschnitt senkrecht zur Bildebene in den Figuren.

Es weist einen vorzugsweise in der Gehäusemittellängsachse 9 verlaufenden zylindrischen Hohlraum 6 auf, der zur Aufnahme eines nicht dargestellten hydraulischen Kolbens dient, welcher einen Teil der Schließermechanik bildet.

Bei den mit dem erfindungsgemäßen Verfahren hergestellten, das heißt erosiv nachbearbeiteten Bohrungen handelt es sich um Kanäle des Hydraulikkreislaufs im fertigen Schließer. Exemplarisch dargestellt ist eine sacklochartige Längsbohrung 2, die von zwei Querbohrungen 3, 4 durchkreuzt wird. Die Längsbohrung 2 stellt eine typische Tieflochbohrung mit relativ großer Länge und kleinem Durchmesser dar. Die Querbohrungen 3 und 4 sind als kürzere Durchgangsbohrungen ausgebildet. Sie führen von der Außenseite des Gehäuses in den zylindrischen Hohlraum 6. Zwischen den Querbohrungen 3 und 4 ist eine sacklochartige Bohrung 5 mit größerem Durchmesser angeordnet. Sie dient zur Aufnahme eines Regulierventils. Der Bohrungsgrund ist konisch zulaufend. Der konische Abschnitt der Bohrung 5 durchkreuzt die Längsbohrung 2. Er dient zur Aufnahme des Ventilkegels des Regulierventils.

Beim fertigen Schließer sind die Bohrungen 2 - 4 mit Hydrauliköl gefüllt und bilden mit dem Hydrauliköl im Zylinderraum 6 einen geschlossenen Hydraulikkreislauf im Gehäuseinnern.

Hierbei sind die Außenmündungen der Bohrungen 2, 3 und 4 durch eingepreßte Sperrkugeln geschlossen und die Ventilaufnahmebohrung 5 ist durch das darin aufgenommene abgedichtete Regulierventil ebenfalls nach außen hin geschlossen.

Die Fertigung der Bohrungen 2 - 5 erfolgt in mehreren Schritten. Zunächst wird die Längsbohrung 2 als Tieflochbohrung spanend gebohrt. Das angewandte Tieflochbohrverfahren ist an sich bekannt. Es kann ein herkömmlicher Tieflochbohrer eingesetzt werden, der eine spezielle Schneidengeometrie aufweist und innen hohl ausgebildet ist, zur Zuführung des Kühlmediums.

Der Bohrer arbeitet mit hoher Drehzahl bei hohem Druck. Die Späne werden durch das Kühlmedium weitgehend ausgespült.

Nach Ausbildung der Längsbohrung 2 werden dann die Querbohrungen 3, 4 und die Aufnahmebohrung 5 ebenfalls spanend gebohrt, wobei ein herkömmlicher Spiralbohrer verwendet werden kann. In den Bereichen, wo die Bohrungen 3 - 5 in die Bohrung 2 einmünden, bzw. diese durchkreuzen, entstehen meist Grate. In den Figuren sind solche Grate im Kreuzungs- bzw. Mündungsbereich von Längsbohrung 2 und Querbohrung 3, 4 mit 3 a bzw. 4 a und Konus der Ventilaufnahmebohrung 5 mit 5 a bezeichnet. Ferner sind noch Späne angedeutet. Sie sind mit 7 bezeichnet. Sie schweben in der Bohrung 2, eine Ansammlung von Spänen 7 ist im Bohrungsgrund 8 angeordnet und einige Späne liegen an der Bohrungswand an bzw. sind mit dieser teilweise sehr fest verklebt, wobei die angetrocknete Kühlflüssigkeit der vorangegangenen Bohrbearbeitung als Kleber wirkt. Die Verklebung der Späne ist auch eine der Ursachen dafür, daß die Späne durch übliche Auswaschvorgänge oder durch Preßluft nicht entfernt werden können.

Das Entgraten und Entfernen der Späne erfolgt durch erosive Nachbearbeitung. Bei dem dargestellten Ausführungsbeispiel wird zum Erodieren die speziell aufgebaute Röhrchenelektrode 10 verwendet. Es wird Funkenerodieren oder Lichtbogenerodieren eingesetzt.

Über das Innere der Röhrchenelektrode 10 wird im Falle von Funkenerodieren ein Dielektrikum und im Falle von Lichtbogenerodieren ein elektrisch leitendes Hilfsmedium, z. B. eine elektrisch leitende Flüssigkeit, ein Elektrolyt, zugeführt. Die Erodierelektrode 10 hat hierfür in der Längsmittelachse einen Zuführkanal 11.

In dem dargestellten Fall wird die Erodierelektrode 10 von oben her vertikal in die Bohrung 12 eingeführt. Das Gehäuse 1 ist dabei so angeordnet, daß die Bohrung 2 vertikal ausgerichtet ist mit Öffnung oben und Bohrungsgrund 8 unten.

Die in Figur 2 näher dargestellte Elektrode 11 ist rohrförmig. Der obere Teil besteht aus einem elektrisch leitenden Rohr, das am Umfang elektrisch isoliert ist, z. B. mit Isolierlack oder durch einen dünnen Kunststoffschlauch. Bei einer technisch besonders vorteilhaften Ausführung besteht der obere Teil aus einem Aluminiumrohr 12 mit einem elektrisch isolierenden äußeren Mantel 13 aus Dickschichteloxal.

Am unteren Ende des Rohres 12 ist eine separat ausgebildete Erodierspitze 14 eingesteckt. Sie ist im dargestellten Ausführungsbeispiel aus Kupfer ausgebildet, kann jedoch grundsätzlich aus allen für ein Erodierwerkzeug geeigneten Werkstoffen bestehen, z. B. Graphit, W-Cu-Legierungen usw.

An ihrer Längsmittelachse weist sie einen Durchgangskanal auf, der zusammen mit dem inneren Kanal des Rohrs 12 den Zufuhrkanal 11 des Hilfsmediums bildet, das am konisch zulaufenden freien Ende der Erodierspitze 14 austritt. Die Erodierspitze 14 unterliegt einem mehr oder weniger starken Verschleiß und muß daher auswechselbar sein. Bei der beschriebenen Anordnung ist diese einfach und kostengünstig zu realisieren.

Die Erodierspitze 14 stellt den aktiven Teil der Elektrode 10 dar. Der erosive Abbau des Werkstoffs erfolgt ausschließlich im Erodierbereich 15 entlang der Erodierspitze 14. Der obere elektrisch isolierte Teil 12 der Elektrode ist inaktiv.

Eine Erodierelektrode mit dem dargestellten Aufbau kann sowohl beim Lichtbogenerodieren als auch beim Funkenerodieren eingesetzt werden.

Beim Lichtbogenerodieren ist vorgesehen, daß die Elektrode axiale Schwingungen hoher Frequenz ausführt. Sie kann dabei zusätzlich um ihre Längsachse rotieren, ist aber vorzugsweise fest.

Beim Funkenerodieren ist vorgesehen, daß die Elektrode um ihre Längsachse rotiert. Ausführungen mit nicht drehender Elektrode sind aber ebenfalls möglich.

Die Elektrode 10 kann so ausgeführt sein, daß diese Arbeitsbewegung der Elektrode, das heißt axiale Schwingungen bzw. Rotationen von der gesamten Elektrode 10 oder bei alternativen Ausführungen nur von der Erodierspitze 14 ausgeführt wird.

Die erosive Bearbeitung wird wie folgt durchgeführt:
Die Elektrode 10 wird mit vorgegebenem axialen Vorschub von oben her in die vertikal ausgerichtete Bohrung 2 eingeführt.

Das durch den inneren Elektrodenkanal 11 zugeführte Hilfsmedium tritt kontinuierlich aus dem unteren Ende der Erodierspitze 14 aus und strömt zwischen der Innenwandung der Bohrung 2 und der Außenwand der Elektrode 10 nach oben ab. Das Hilfsmedium in der Bohrung steht unter Druck (bei Funken-Erosion bis 100 bar, bei Lichtbogen-Erosion bis 10 bar). Der hohe Arbeitsdruck begünstigt den Ausspüleffekt.

Das erosive Abtragen der Späne und Grate setzt ein, sobald der aktive Bereich 15 einen mit der Innenwandung der Bohrung in Kontakt stehenden Span oder Grat erreicht. Es entstehen dabei Partikel kleiner als 100 μ. Die Partikel werden durch das Hilfsmedium ausgespült.

Die Elektrode 10 kann so geschaltet sein, daß während des erosiven Abtragens die Vorschubgeschwindigkeit automatisch reduziert wird und, sobald keine Erosion mehr erfolgt, die Vorschubgeschwindigkeit wieder auf den vorgegebenen Ausgangswert erhöht wird.

Bei dem dargestellten Ausführungsbeispiel ist ein optimaler Erodierspalt gewährleistet, da der Durchmesser der Erodierspitze 14 im gesamten aktiven Bereich 15 geringer als der Durchmesser des isolierten Rohrs 12 ist und der Durchmesser des Rohrs 12 auf den Durchmesser der Bohrung 2 abgestimmt ist.

Im dargestellten Fall beträgt der Durchmesser der Bohrung 2 = 2,8 mm, der Durchmesser des Rohrs 12 = 2,6 mm und der größte obere Durchmesser der Erodierspitze 14 = 2,5 mm. Die Länge der Bohrung 2 beträgt 145 mm.

Die in der Bohrung 2 lose angeordneten Späne 7 werden, soweit der zum Erodieren erforderliche Kontakt zur Bohrungswandung nicht vorliegt, von der Elektrode 10 mitgenommen und im Bereich des Bohrungsgrunds 8 zusammengeschoben und schließlich erodiert, sobald der erforderliche Kontakt zur Bohrungswandung auftritt. Der erosive Abtrag erfolgt bevor die Elektrode 10 ihre Endposition am Bohrungsgrund 8 erreicht hat.

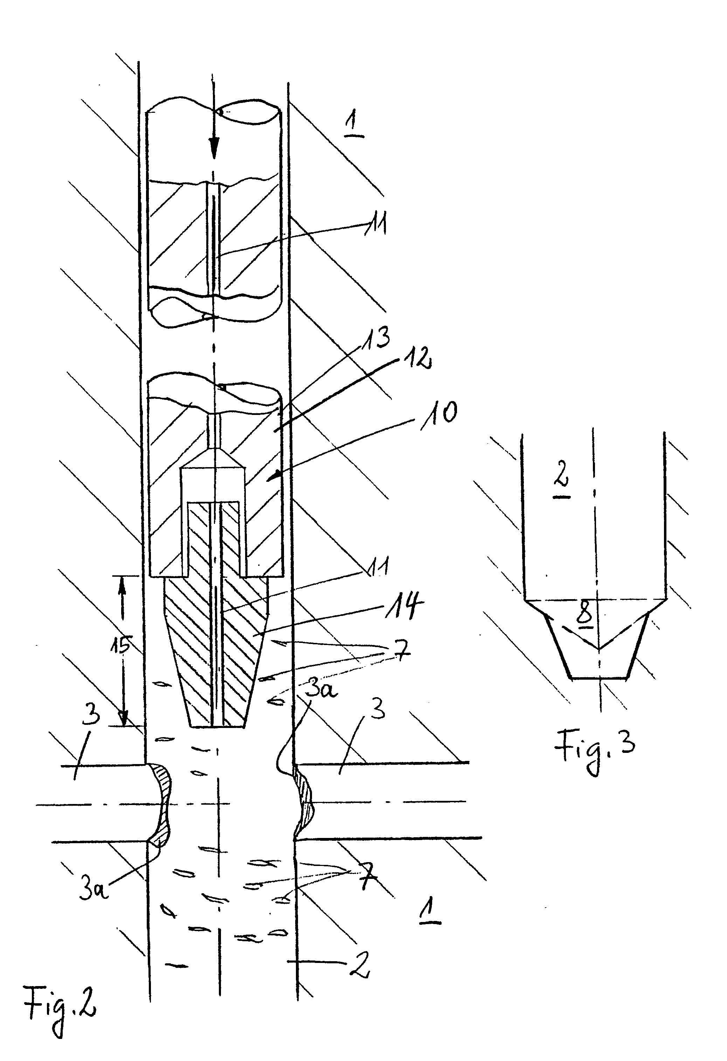

Wenn die Elektrode etwas tiefer bohrt, als vorgebohrt ist, wie in Figur 3 angedeutet, ist ein absolut spänefreier Bohrungsgrund 8 gewährleistet. Bisher ist kein anderes Verfahren bekannt, mit dem dies möglich wäre.

Beim Lichtbogen-Bearbeiten ist der hauptaktive Teil der konische Abschnitt der Spitze 14, da hier die axialen Schwingungen zur Spaltveränderung beitragen und die Lichtbogenbildung unterstützen. Bei abgewandelten Ausführungen kann die Spitze 14 auch zylindrisch sein, vorzugsweise für funkenerosives Bearbeiten.

Falls erforderlich, können zusätzlich auch die Querbohrungen 3 und 4 in entsprechender Weise erosiv nachbearbeitet werden. Hierfür werden die als Durchgangsbohrungen ausgebildeten Bohrungen 3, 4 z. B. über einen in den Zylinderhohlraum 6 einschiebbaren Werkzeugdorn geschlossen. Der Dorn kann im Bereich der in den Zylinderraum 6 einmündenden Mündungen jeweils Vertiefungen aufweisen, die als Reservoir zur Aufnahme des Hilfsfluids dienen.

Zum Erodieren kann eine entsprechend aufgebaute Elektrode 10 verwendet werden.

Bei diesem Arbeitsgang werden dann auch eventuelle Grate im Mündungsbereich der Bohrungen 3, 4 im Zylinderraum 6 entfernt. Diese erosive Bearbeitung der Bohrungen 3, 4 kann vor oder nach der oben beschriebenen erosiven Bearbeitung der Bohrung 2 erfolgen.

Es sind auch Anwendungsfälle denkbar, wo lediglich die Querbohrungen 3, 4 erosiv bearbeitet werden. In der Regel wird jedoch die erosive Bearbeitung der Längsbohrung 2 in Frage kommen, insbesondere, wenn mehrere Bohrungen darin münden oder sie durchkreuzen und vor allem dann, wenn die Bohrung 2, wie im dargestellten Fall, als Sacklochbohrung ausgebildet ist.

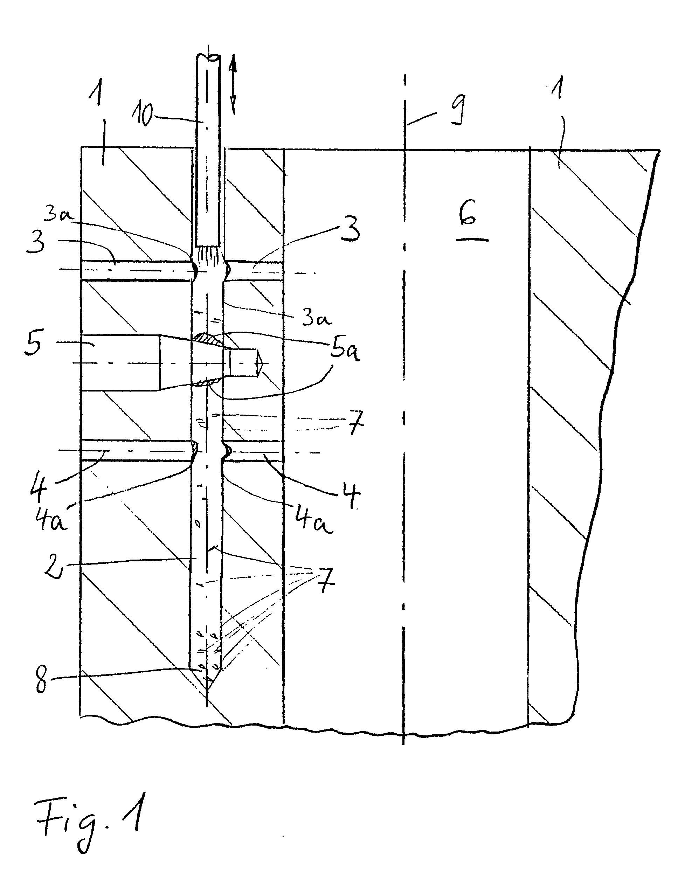

Das mit den Figuren 1 und 2 erläuterte Verfahren kann in gleicher oder entsprechender Weise auch bei der Herstellung von Gehäusen anderer hydraulischer oder pneumatischer Antriebe oder Türschließer verwendet werden.

Ferner sind Abwandlungen des Verfahrens möglich, bei denen die erosive Nachbearbeitung bei Bohrungen angewandt wird, die nicht spanend vorgebohrt werden, sondern auf andere Weise im Gehäuse 1 ausgebildet werden, z. B. bereits im Guß ausgeformt sind.

**Patentansprüche**

1. Verfahren zum Fertigen einer Bohrung, dadurch **gekennzeichnet,** daß nach dem Ausbilden der Bohrung diese durch Erodieren nachbearbeitet wird.

2. Verfahren zum Fertigen einer Bohrung nach Anspruch 1, dadurch **gekennzeichnet,** daß die Bohrung zunächst durch spanendes Bohren ausgebildet wird und sodann durch Erodieren nachbearbeitet wird.

3. Verfahren nach Anspruch 2, dadurch **gekennzeichnet,** daß die Bohrung als Tieflochbohrung und/oder als Sackloch spanend gebohrt wird.

4. Verfahren zum Fertigen einer Bohrung und mindestens einer in die Bohrung mündenden oder die Bohrung durchkreuzenden anderen Bohrung unter Anwendung des Verfahrens nach einem der Ansprüche 1 - 3, dadurch **gekennzeichnet,**

   daß die eine und/oder die andere Bohrung spanend gebohrt wird und sodann die eine und/oder die andere Bohrung durch Erodieren nachbearbeitet wird.

5. Verfahren nach Anspruch 4, dadurch **gekennzeichnet,** daß zuerst die eine Bohrung und sodann die andere Bohrung spanend gebohrt wird und danach zumindest die zuerst gebohrte Bohrung durch Erodieren nachbearbeitet wird.

6. Verfahren nach einem der Ansprüche 2 bis 5, dadurch **gekennzeichnet,** daß nach dem spanenden Bohren zumindest ein Teil der Späne mittels eines in die Bohrung eingeführten Werkzeugs zusammengeschoben und erodiert wird, wobei das Werkzeug vorzugsweise von der Erodierelektrode oder einem mit der Erodierelektrode verbundenen Teil gebildet wird.

7. Verfahren nach Anspruch 6, dadurch **gekennzeichnet,** daß die Erodierelektrode nach dem spanenden Bohren in die Bohrung axial eingeführt wird und erst eingeschaltet wird, sobald sie in einen bestimmten Längenabschnitt der Bohrung, vorzugsweise bis nahe dem Ende der Bohrung, eingetaucht ist.

8. Verfahren nach einem der Ansprüche 1 - 7, dadurch **gekennzeichnet,** daß die erosive Nachbearbeitung durch funkenerosives Bearbeiten, lichtbogenerosives Bearbeiten, Laserbearbeiten, Elektronenstrahlbearbeiten, chemisches Bearbeiten und/oder elektrochemisches Bearbeiten erfolgt.

9. Verfahren nach einem der Ansprüche 1 - 8, dadurch **gekennzeichnet,** daß die erosive Nachbearbeitung mit einer in die zu bearbeitende Bohrung eintauchenden Erodierelektrode erfolgt, die an ihrem freien Ende einen aktiven Abschnitt aufweist, wobei der übrige eintauchende Teil der Elektrode nach außen inaktiv gehalten wird.

10. Verfahren nach Anspruch 9, dadurch **gekennzeichnet,** daß eine Röhrchenelektrode verwendet wird, wobei ein Abschnitt der Röhrchenelektrode mit Hilfe eines elektrisch isolierenden Mantels inaktiv gehalten wird.

11. Verfahren nach Anspruch 9 oder 10, dadurch **gekennzeichnet,** daß eine Röhrchenelektrode verwendet wird, wobei der aktive Abschnitt als eine zum freien Ende hin konisch zulaufende Erodierspitze ausgebildet ist.

12. Verfahren nach einem der Ansprüche 9 - 11, dadurch **gekennzeichnet,** daß zwischen der Innenwandung der Bohrung und der in die Bohrung eingeführten Erodierelektrode ein Erodierspalt gebildet wird, in dem der Durchmesser des aktiven Abschnitts geringer ist als der Durchmesser des inaktiven Abschnitts und dieser geringer ist als der Durchmesser der Bohrung und diese Durchmesser zur Ausbildung des Erodierspalts aufeinander abgestimmt sind.

13. Erodierwerkzeug insbesondere zum Säubern einer Bohrung, z. B. zum Entgraten und/oder Entspänen, vorzugsweise zur Durchführung des Verfahrens nach einem der Ansprüche 1 - 12, dadurch **gekennzeichnet,** daß eine Erodierelektrode (10) vorgesehen ist, die einen länglichen Körper (12) aufweist, der an seinem freien Ende einen erosiv aktiven Abschnitt (14) aufweist und im übrigen nach außen elektrisch isoliert ist.

14. Erodierwerkzeug nach Anspruch 13, dadurch **gekennzeichnet,** daß der aktive Abschnitt (14) geringeren Durchmesser aufweist als die übrige Erodierelektrode (10).

15. Erodierwerkzeug nach Anspruch 14, dadurch **gekennzeichnet,** daß der aktive Abschnitt (14) zum freien Ende hin konisch zuläuft.

16. Erodierwerkzeug nach einem der Ansprüche 13 - 15, dadurch **gekennzeichnet,** daß die Erodierelektrode als Röhrchenelektrode (10) ausgebildet ist und der inaktive Abschnitt des länglichen Körpers als nach außen isoliertes Rohr, vorzugsweise Metallrohr (12) mit Isoliermantel (13), ausgebildet ist.

17. Erodierwerkzeug nach einem der Ansprüche 13 - 16, dadurch **gekennzeichnet,** daß der erosiv aktive Abschnitt (14) als in den länglichen Körper (12) eingesetztes separates Bauteil (14) ausgebildet ist.

Fig. 1

Fig.2

Fig.3